# FASCICULE DE BREVET EUROPEEN

(11) **EP 0 475 832 B1**
(45) Date de publication et mention de la délivrance du brevet: **15.03.1995**
(21) Numéro de dépôt: 91402401.3
(22) Date de dépôt: 10.09.1991
(51) Int. Cl.: G01F 23/24, G05F 1/577, G01D 5/16

(54) **Circuit électronique de mesure comportant des moyens d'alimentation électrique contrôlée d'une sonde résistive**
Elektronische Messschaltung mit einer gesteuerten elektrischen Versorgung für eine Widerstandssonde
Electronic measuring circuit comprising controlled power supply means for a resistive probe

(30) Priorité: 11.09.1990 FR 9011208
(43) Date de publication de la demande: 18.03.1992
(73) Titulaire: MARELLI AUTRONICA, 92000 Nanterre (FR)
(72) Inventeur: Laplagne, Thierry, F-77500 Chelles (FR); Thuillier, Marc, F-91390 Morsang S/Orge (FR)
(74) Mandataire: Schrimpf, Robert

(56) Documents cités:
- EP-A- 0 019 540
- GB-A- 2 107 883
- US-A- 4 163 391
- IBM TECHNICAL DISCLOSURE BULLETIN. vol. 32, no. 2, Juillet 1989, New York, US, pp. 328-333, "Interactive start surge sharing on common supply".

## Description

La présente invention concerne un circuit électronique de mesure comportant des moyens d'alimentation électrique contrôlée d'une sonde résistive.

La présente invention s'applique en particulier à la mesure de niveau et/ou de volume de fluide dans un réservoir, notamment la mesure de niveau huile dans un carter de moteur de véhicules automobiles.

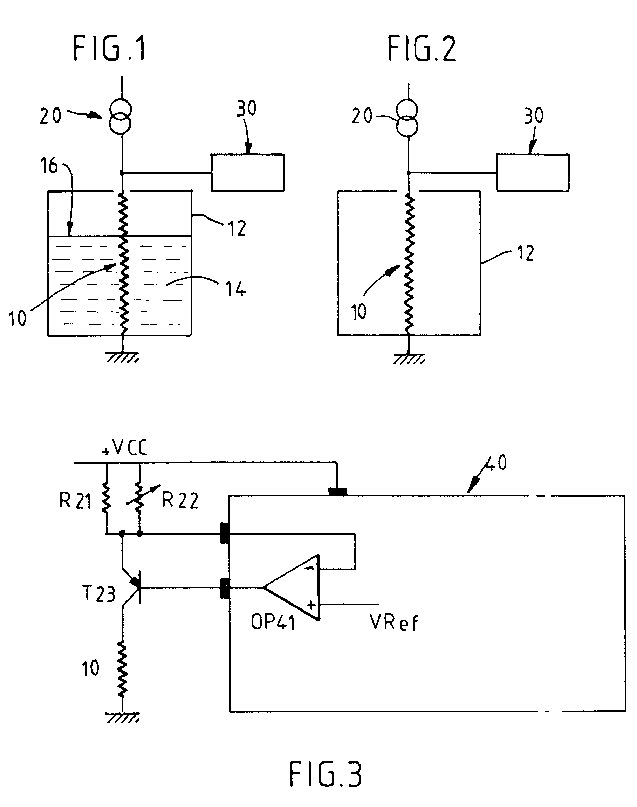

La demanderesse a proposé depuis de nombreuses années un système de mesure, notamment pour la mesure de niveau d'huile, comprenant comme représenté sur les figures 1 et 2 annexées, une sonde 10 formée d'un fil résistif destiné à être placé verticalement dans le carter 12 du fluide 14 à jauger, des moyens 20 formant source d'alimentation à courant constant de la sonde 10 et des moyens 30 de surveillance de la tension aux bornes de la sonde.

Pour un fil résistif 10 à coefficient de température positif, la résistance de la sonde 10, donc la tension à ses bornes, tend à augmenter à partir de l'instant initial d'alimentation.

Cependant, l'élévation de température, donc de résistance et de tension, dépendent du niveau de fluide 14 dans le carter 12.

En effet, la portion de sonde 10 plongée dans le fluide 14 est plus refroidie que celle placée dans l'air.

Les moyens 30 de surveillance sont ainsi conçus pour déterminer la différence entre la tension U1 aux bornes de la sonde après un temps t1 d'alimentation de la sonde 10, et la tension initiale U0 au moment de mise en service de l'alimentation 20, ou peu de temps après cette mise en service.

Cette différence de tension U1-U0 est en effet représentative du niveau de fluide jaugé 14.

Le schéma de la figure 1 correspond à un carter 12 plein aux deux tiers d'un fluide 14. Le niveau supérieur de ce fluide 14 est référencé 16.

Le schéma de la figure 2 correspond à un carter 12 vide.

Si l'on suppose les sondes 10 et les moyens d'alimentation électrique 20 identiques, et des températures ambiantes égales, les tensions U0 aux bornes des deux sondes 10 des figures 1 et 2 sont égales à la mise en service de l'alimentation 20.

En revanche, les tensions U1 aux bornes des deux sondes 10 ne sont plus identiques après un temps t1 pour lequel les systèmes sont en équilibre thermique.

De fait, dans le cas de la figure 1, la partie immergée de la sonde est plus refroidie que la partie émergée, par conséquent la résistance totale de la sonde et donc la tension à ses bornes est plus faible que pour la sonde 10 de la figure 2.

En conclusion, la différence de tension U1-U0 dans le cas d'une sonde partiellement immergée de la figure 1 est inférieure à la différence de tension U1-U0 d'une sonde complètement émergée comme représentée sur la figure 2.

Le système de mesure ainsi décrit a déjà fait l'objet d'une abondante littérature. On pourra par exemple se référer aux documents FR-A-2367276 et US-A-4163391 qui décrivent des schémas de base de ce système de mesure.

La demanderesse a par ailleurs proposé depuis de nombreuses années un circuit intégré permettant d'effectuer la mesure précitée.

Un tel circuit intégré est notamment proposé par la Société Texas Instruments, dans son catalogue, sous les références SN 96527 et SN 96525.

On a schématisé sur la figure 3 annexée la structure de moyens d'alimentation électrique à courant constant de la sonde 10 formée par le circuit intégré précité connu.

Sur la figure 3 le circuit intégré est schématisé sous forme de l'encadré référencé 40.

On aperçoit sur la figure 3 une résistance shunt R21, une résistance variable R22, un transistor ballast T23, une sonde résistive 10 et le circuit intégré 40.

La résistance variable R22 est connectée en parallèle de la résistance shunt fixe R21. Par ailleurs, la résistance shunt R21 est connectée en série du trajet de conduction principal émetteur-collecteur du transistor ballast T23 et de la sonde 10, entre une borne d'alimentation positive +VCC et la masse. Le transistor T23 est piloté, pour débiter un courant constant dans la sonde 10, par un amplificateur opérationnel OP41 placé dans le circuit intégré 40. Pour cela l'amplificateur opérationnel OP41 compare la tension prélevée aux bornes du shunt R21 et appliquée à l'entrée inverseuse de l'amplificateur opérationnel OP41 à une tension de référence VREF, appliquée sur l'entrée non inverseuse de l'amplificateur opérationnel OP41.

Pour tenir compte des dispersions inévitables au niveau de la résistance shunt R21 dues aux tolérances de fabrication de celles-ci, le réglage du courant dans la sonde résistive 10 est obtenu par réglage de la résistance ajustable R22, par exemple par usinage au laser.

Cela impose d'utiliser une résistance variable R22 externe au circuit intégré 40.

Le circuit du type représenté schématiquement sur la figure 3 a déjà rendu de grands services et donné lieu à une utilisation à grande échelle depuis de nombreuses années.

Cependant, il faut reconnaître que ce circuit présente les inconvénients, certes non rédhibitoires, suivants :
- encombrement du circuit imprimé dû notamment à la présence de la résistance ajustable R22,
- coût,
- temps de réglage,
- fiabilité limitée.

Le but principal de la présente invention est d'éliminer les inconvénients de la technique antérieure.

Ce but est atteint selon la présente invention grâce à un circuit électronique de mesure du type comprenant des moyens d'alimentation électrique contrôlée d'une sonde résistive et des moyens de mesure d'une grandeur électrique fonction de la résistance de la sonde résistive caractérisé par le fait qu'il comprend :
- une pluralité de sources d'alimentation électrique,
- un même nombre d'interrupteurs aptes à mettre sélectivement en service chacune desdites sources d'alimentation électrique,
- une borne d'entrée apte à recevoir un signal externe de codage représentatif du nombre de sources d'alimentation électrique à mettre en service,
- un organe de décodage du signal externe, qui commande les interrupteurs, et
- un organe de validation apte à figer les sorties de l'organe de décodage dans un état déterminé.

Selon une caractéristique avantageuse de la présente invention, lesdites sources d'alimentation électrique sont des sources de courant constant.

Selon une autre caractéristique avantageuse de la présente invention lesdites sources d'alimentation électrique susceptibles d'être mises sélectivement en service sont connectées en parallèle d'une résistance shunt elle-même connectée en série de la sonde résistive et d'un transistor ballast.

Selon une autre caractéristique avantageuse de la présente invention, il est prévu un amplificateur opérationnel qui compare la tension aux bornes du shunt à une tension de référence et qui pilote le transistor ballast pour obtenir un courant constant déterminé dans la sonde résistive.

Comme cela sera expliqué par la suite, le circuit électronique de mesure conforme à la présente invention peut faire l'objet de nombreuses variantes de réalisation. Par exemple, les sources d'alimentation électriques susceptibles d'être mises sélectivement en service peuvent être utilisées pour régler la tension de référence servant à piloter le transistor ballast.

D'autres caractéristiques, buts et avantages de la présente invention apparaîtront à la lecture de la description détaillée qui va suivre, et en regard des dessins annexés, donnés à titre d'exemples non limitatifs et sur lesquels :
- les figures 1 et 2 précédemment décrites illustrent schématiquement le principe de mesure d'un niveau de fluide à l'aide d'une sonde résistive,
- la figure 3 précédemment décrite représente schématiquement la structure de moyens d'alimentation électrique connus pour une telle sonde résistive,
- la figure 4 représente schématiquement des moyens d'alimentation électrique conformes à la présente invention,
- la figure 5 représente plus en détail la structure de tels moyens d'alimentation électrique conformes à la présente invention,
- la figure 6 représente schématiquement, sous forme de blocs fonctionnels, la structure générale d'un circuit intégré conforme à la présente invention,
- la figure 7 représente une première variante de réalisation du circuit conforme à la présente invention,
- la figure 8 représente schématiquement une seconde variante de réalisation d'un circuit électronique de mesure conforme à la présente invention, et
- la figure 9 représente schématiquement une troisième variante de réalisation d'un circuit électronique de mesure conforme à la présente invention.

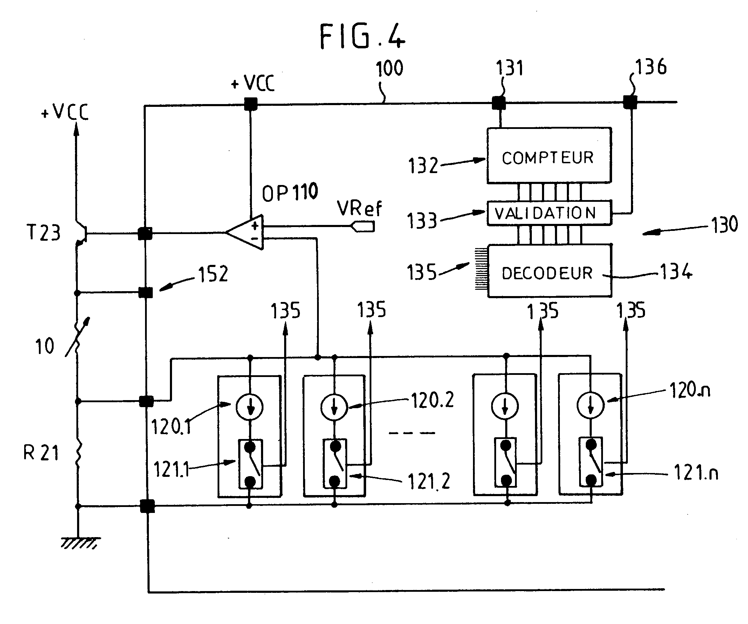

De préférence, l'essentiel du circuit électronique de mesure conforme à la présente invention est réalisé sous forme d'un circuit intégré. Ce circuit intégré est schématisé sous forme de l'encadré référencé 100 sur les figures 4 à 8.

Sur la figure 4 on aperçoit le transistor ballast T23, la sonde 10 et une résistance shunt R21. Le trajet de conduction principal émetteur/collecteur du transistor ballast T23 est connecté en série de la sonde 10 et de la résistance shunt R21, entre une borne d'alimentation positive +VCC et la masse. Plus précisément, selon le mode de réalisation particulier représenté sur la figure 4, la sonde 10 est prévue entre le transistor ballast T23 placé côté borne d'alimentation positive +VCC, et la résistance shunt R21 placée côté masse.

Le circuit intégré 100 comprend un amplificateur opérationnel OP110 qui compare une tension de référence VREF à la tension aux bornes de la résistance shunt R21. Selon le mode de réalisation représenté sur la figure 4, la tension de référence VREF est appliquée sur l'entrée non inverseuse de OP110. L'entrée inverseuse de OP110 est reliée au point commun à la sonde 10 et à la résistance shunt R21. L'amplificateur opérationnel OP110 pilote le transistor ballast T23 de sorte que celui-ci débite un courant constant requis dans la sonde 10. Pour cela, la sortie de OP110 est reliée à la base du transistor ballast T23.

Par ailleurs, le circuit intégré 100 comprend plusieurs sources de courant 120.1, 120.2 ... 120.N connectées en parallèle de la résistance shunt R21 par l'intermédiaire d'interrupteurs commandés 121.1, 121.2 ... 121.N, respectivement associés.

Les interrupteurs 121.1 à 121.N sont pilotés par un organe de décodage 130.

Cet organe de décodage 130 est placé dans le circuit intégré 100.

Comme indiqué précédemment, l'organe de décodage 130 est conçu pour décoder un signal de codage externe appliqué sur une entrée 131 du circuit intégré 100. Le signal externe appliqué sur l'entrée 131 du circuit intégré 100 a pour fonction de définir le nombre de sources 120.1 à 120.N devant être mises en service pour obtenir le courant constant requis dans la sonde 10.

De préférence le signal appliqué sur l'entrée 131 du circuit intégré 100 est un signal impulsionnel, le codage, donc le nombre de sources 121.1 à 121.N devant être mises en service étant défini par le nombre d'impulsions successives appliquées sur l'entrée 131. Dans ce cas l'organe de codage 130 comprend essentiellement un compteur 132 recevant sur son entrée d'horloge les impulsions appliquées sur l'entrée 131 du circuit intégré 100, et un décodeur 134 conçu pour décoder la sortie du compteur 132. Les sorties 135 pilotent les interrupteurs 120.1 à 120.N comme représentés schématiquement sur la figure 4.

Selon une autre caractéristique importante de la présente invention, il est prévu un organe de validation 133 pour figer les sorties de l'organe de décodage 130 lorsque le réglage adéquat du courant circulant dans la sonde 10 est obtenu.

Selon la représentation schématique donnée sur la figure 4, l'organe de validation 133 est intercalé entre la sortie du compteur 132 et l'entrée du décodeur 134. L'organe de validation 133 est commandé par un signal appliqué sur une entrée 136 du circuit intégré 100.

L'organe de validation 133 apte à figer l'état des entrées du décodeur 134 et/ou la sortie de l'organe de décodage 130 peuvent être formés de tout moyen classique approprié bien connu des fabricants des circuits intégrés.

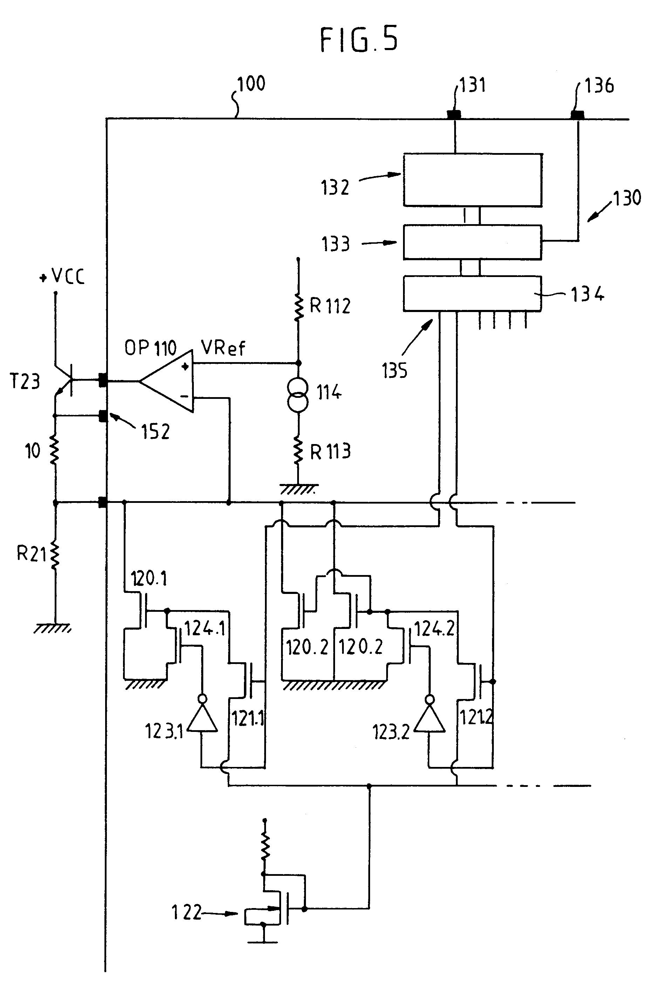

On a détaillé sur la figure 5 un mode de réalisation des sources de courant 120.1 à 120.N et des interrupteurs 121.1 à 121.N.

Selon le mode de réalisation donné sur la figure 5, les sources de courant sont formées de transistors dont le trajet de conduction principal est connecté en parallèle de la résistance shunt R21, et dont les portes sont reliées par l'intermédiaire des interrupteurs 121.1 à 121.N à un étage de polarisation 122.

Les interrupteurs 121.1 à 121.N sont eux-mêmes formés de transistors ayant leur trajet de conduction principal relié entre les portes des transistors 120.1 à 120.N formant source et la sortie de l'étage de polarisation 122. Les portes des transistors formant interrupteur 121.1 à 121.N sont reliées respectivement aux sorties 135 du décodeur 134.

Lorsqu'un transistor interrupteur 121.1 à 121.N est bloqué par la sortie correspondante 135 du décodeur 134, le transistor formant source 120.1 à 120.N associé est également bloqué.

Par contre, lorsqu'un transistor interrupteur 121.1 à 121.N est saturé par la sortie 135 correspondante du décodeur 134, le transistor formant source 120.1 à 120.N associé devient conducteur, une source de courant additionnelle est ainsi connectée en parallèle de la résistance shunt R21.

Pour l'essentiel, le réglage des moyens d'alimentation électrique ainsi formé est le suivant.

Lors de la mise sous tension initiale du circuit, tous les générateurs 120.1 à 120.N sont coupés. Les interrupteurs 121.1 à 121.N sont ouverts.

On mesure le courant sonde par un moyen quelconque, par exemple à l'aide d'un ampèremètre connecté à la place de la sonde 10 contre le transistor ballast T23 et la résistance shunt R21. Pour obtenir le courant de sonde requis, on applique sur l'entrée 131 le nombre d'impulsions requis. Chaque impulsion conduit à la mise en service d'un générateur supplémentaire. On change ainsi le courant sonde, les courants des générateurs 120.1 à 120.N venant s'ajouter au courant transitant par la résistance shunt R21 dont la tension est contrôlée.

Lorsque le courant requis est obtenu, un signal approprié est appliqué sur l'entrée 136 afin de figer l'état du décodeur 130, donc le courant dans la sonde 10.

Selon le cas, les divers générateurs de courant 120.1 à 120.N peuvent être identiques et débiter des courants égaux, ou les générateurs 120.1 à 120.N peuvent être conçus pour débiter des courants différents évoluant selon une progression connue.

Cette dernière variante est illustrée schématiquement sur la figure 5, où l'on voit une première source de courant 120.1 formée d'un transistor unique, et une deuxième source de courant 120.2 formée de deux transistors connectés en parallèle afin de débiter un courant double de la première source de courant.

La tension de référence VREF appliquée sur l'amplificateur opérationnel OP110 peut être obtenu par tout moyen classique connu de l'homme de l'art.

Selon le mode de réalisation particulier représenté à titre d'exemple non limitatif sur la figure 5 la tension de référence appliquée sur l'amplificateur opérationnel OP110 est obtenue sur un point intermédiaire d'une branche comprenant en série deux résistances R112, R113 et une source de courant constant 114.

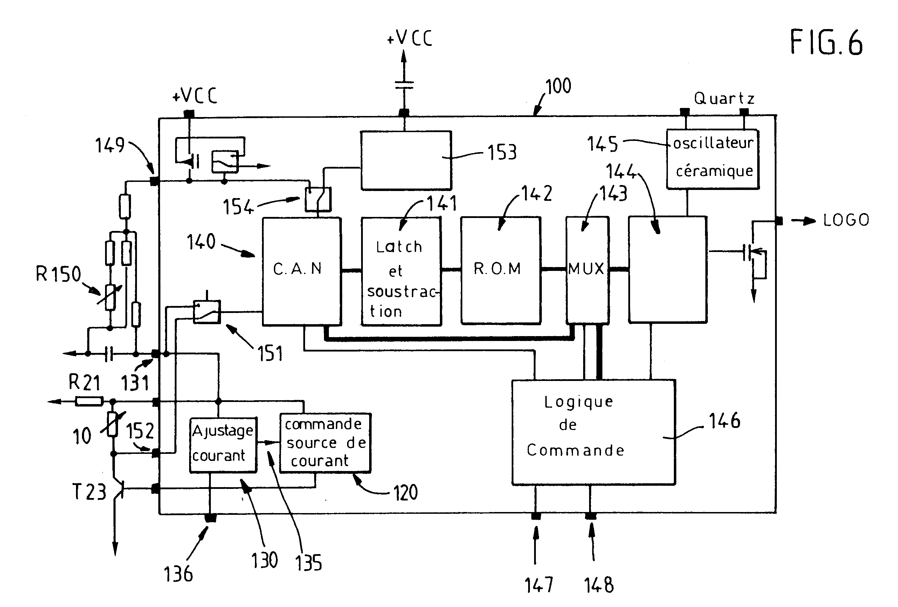

On a représenté schématiquement sur la figure 6 annexée, la structure générale d'un circuit intégré 100 conforme à la présente invention.

On retrouve sur la figure 6 annexée le transistor ballast T23 connecté en série d'une sonde 10 et de la résistance shunt R21. On a schématisé sur la figure 6 sous forme du bloc fonctionnel 130 l'organe de codage relié aux entrées 131 et 136 précitées.

On a par ailleurs schématisé sur la figure 6 sous forme du bloc fonctionnel 130 l'amplificateur opérationnel OP110 et les diverses sources de courant 120.1 à 120.N associées aux interrupteurs de mise en service 121.1 à 121.N.

Les tensions U0 et U1 prélevées aux bornes de la sonde 10 peuvent bien entendu être traitées selon toutes dispositions connues de l'homme de l'art pour déterminer le niveau de fluide jaugé, par exemple selon les dispositions décrites dans les documents FR-A-2367276 et US-A-4163391, ou encore selon les dispositions retenues dans les circuits intégrés disponibles actuellement dans le commerce.

Selon le mode de réalisation particulier représenté sur la figure 6, les tensions U0 et U1 mesurées aux bornes de la sonde 10 sont appliquées à un convertisseur analogique numérique 140 puis appliquées à un module 141 ayant pour fonction de mémoriser celles-ci et d'établir la différence de tension U1-U0. Le signal numérique représentatif de cette différence de tension U1-U0 sert d'adresse à une mémoire 142, par exemple une mémoire ROM qui délivre à sa sortie un signal représentatif d'une tension de commande de logomètre fonction du niveau de fluide détecté.

Le signal de sortie de la mémoire 142 peut transiter par un module de multiplexage 143 avant d'atteindre le circuit de commande 144 du logomètre. Ce circuit 144 est piloté par un oscillateur céramique 145. L'ensemble du circuit est contrôlé par une logique de commande 146.

Dans le cas d'une mesure de niveau d'huile, l'affichage de ce niveau peut être temporisé ou maintenu jusqu'à l'ouverture du manocontact de pression d'huile.

Dans ce cas, l'information d'ouverture du manocontact est appliquée sur l'entrée 147 du circuit intégré 100, reliée à la logique de commande 146.

De préférence, le circuit intégré 100 est conçu pour mémoriser la valeur du niveau d'huile mesuré et permettre d'afficher celle-ci sur le logomètre en cas de signal de rappel appliqué sur une entrée 148 du circuit.

Selon une autre caractéristique avantageuse de la présente invention, le circuit intégré 100 est conçu pour permettre la mesure et l'affichage d'une seconde donnée. Il peut s'agir par exemple de la température d'eau, de la pression d'huile ou de la température d'huile. Le passage à la mesure et à l'affichage de la deuxième donnée peut être commandé soit par la fin de la temporisation précédemment citée, soit par l'ouverture du manocontact.

On a schématisé sur la figure 6 un capteur de mesure de la seconde donnée sous forme d'une résistance R150 montée dans un pont entre les entrées 131 et 149 du circuit.

Un inverseur 151 permet de relier alternativement l'entrée 131 et une entrée 152 connectées à la sonde au convertisseur analogique numérique 140.

Ainsi lors du passage à la seconde fonction, la valeur de la seconde donnée est appliquée au convertisseur analogique numérique 140. Le signal issu du convertisseur analogique numérique 140 peut transiter par la ROM 142 avant d'atteindre le multiplexeur 143 et les circuits de commande 144 pour commander le logomètre. Cependant de préférence le signal correspondant à la seconde donnée issue du convertisseur 140 est appliqué directement au multiplexeur 143 pour piloter le logomètre. Dans ce cas le multiplexeur 143 sert à appliquer au circuit de commande 144 soit le signal issu de la ROM 142 pour l'affichage d'un niveau d'huile, soit le signal issu directement du convertisseur analogique numérique 140 pour l'affichage du second paramètre (température d'eau, pression d'huile ou température d'huile).

Sur la figure 6, on a référencé schématiquement 153 un module apte à générer une tension de référence pour le convertisseur analogique numérique 140.

De préférence, un inverseur 154 est conçu pour commuter la référence du convertisseur analogique numérique 140 sur la tension d'alimentation du capteur R150 pour une mesure ratiométrique.

A titre d'exemple non limitatif la première mesure de tension U0 aux bornes de la sonde 10 peut être obtenue une milliseconde après activation de la source de courant, tandis que la seconde tension U1 mesurée aux bornes de la sonde 10 peut être obtenue 0,875 secondes après la première mesure.

Selon le mode de réalisation précitée décrit en regard des figures 4, 5 et 6, la sonde 10 est connectée en serie entre le transistor ballast T23 placé côté alimentation positif +VCC et la résistance shunt R21 placée côté masse.

L'invention n'est pas limitée à cette disposition particulière.

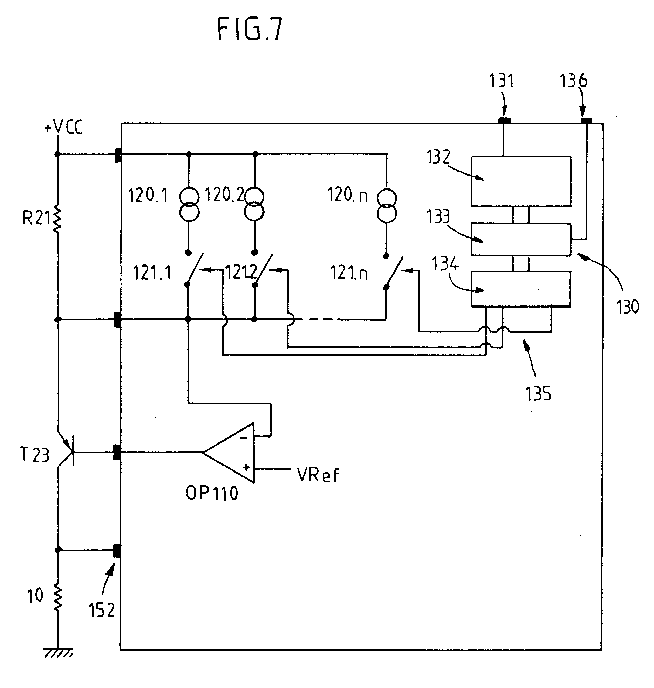

Ainsi, comme représenté sur la figure 7, on peut prévoir de placer le transistor ballast T23 entre la résistance shunt R21 placée côté alimentation positive +VCC et la sonde 10 placée côté masse. On aperçoit sur la figure 7 les sources de courant 120.1 à 120.N susceptibles d'être mises en service par les interrupteurs 121.1 à 121.N pilotés par l'organe de décodage 130.

On aperçoit par ailleurs sur la figure 7, l'amplificateur opérationnel OP110 qui pilote le transistor ballast T23.

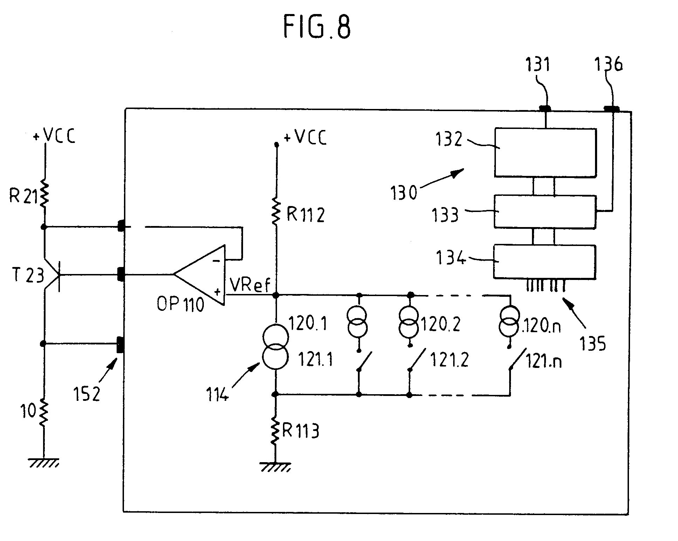

On a représenté sur la figure 8 annexée, une autre variante de réalisation dans laquelle les sources de courant 120.1 à 120.N ne sont plus connectées en parallèle de la résistance shunt R21 mais sont utilisées pour contrôler la tension de référence VREF appliquée à l'amplificateur opérationnel OP110.

On retrouve sur la figure 8 un transistor ballast T23, une résistance shunt R21 et une sonde 10 connectée en série entre une borne d'alimentation positive +VCC et la masse.

Comme indiqué précédemment en regard de la figure 7, d'une part et des figures 4 à 6 d'autre part, l'ordre de connection du transistor ballast T23, de la résistance shunt R21 et de la sonde 10 dans la branche série, peut faire l'objet de diverses variantes.

On aperçoit par ailleurs sur la figure 8, l'amplificateur opérationnel OP110 dont la sortie attaque la base du transistor ballast T23 et qui compare sur ses entrées la tension prélevée aux bornes de la résistance shunt R21 à une tension de référence VREF.

En l'espèce cette tension de référence est définie au niveau d'un point intermédiaire d'une branche comprenant en série, entre une borne d'alimentation positive +VCC et la masse, deux résistances R112, R113 et une source de courant constant 114 de façon similaire aux dispositions précédemment décrites en regard de la figure 5.

Cependant, selon la figure 8, il est prévu en outre une pluralité de sources de courant constant 120.1 à 120.N, susceptibles d'être connectées en parallèle de la source de courant 114 par l'intermédiaire d'interrupteurs 121.1 à 121.N pour modifier la tension de référence VREF afin d'obtenir le courant constant requis dans la sonde 10.

De façon similaire au mode de réalisation précité, les interrupteurs 121.1 à 121.N sont pilotés par les sorties 135 de l'organe de décodage 130 équipées d'un organe de validation 133.

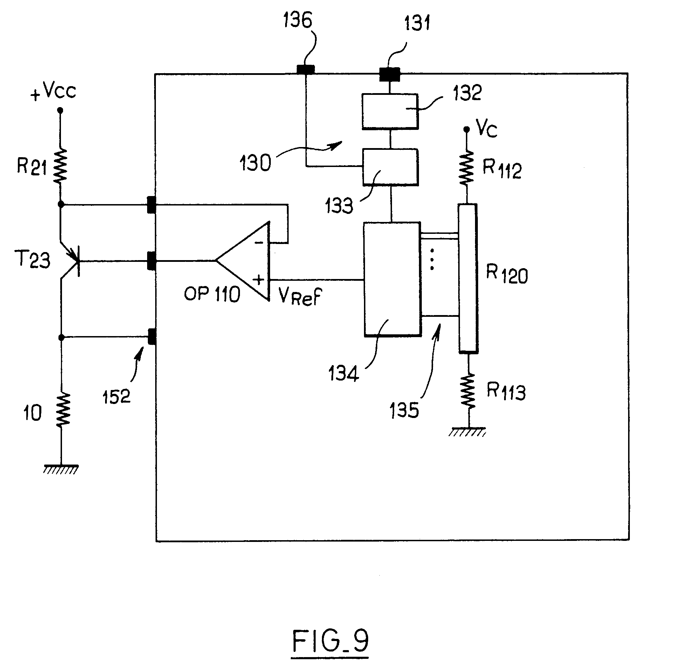

On a représenté sur la figure 9 annexée, une autre variante de réalisation dans laquelle les sources d'alimentation électrique 120 conformes à la présente invention sont utilisées pour contrôler la tension de référence VREF appliquée à l'amplificateur opérationnel OP110.

On retrouve sur la figure 9 un transistor ballast T23, une résistance shunt R21 et une sonde 10 connectée en série entre une borne d'alimentation positive +VCC et la masse.

Comme indiqué précédemment en regard des figures 7 et 8, d'une part et des figures 4 à 6 d'autre part, l'ordre de connection du transistor ballast T23, de la résistance shunt R21 et de la sonde 10 dans la branche série, peut faire l'objet de diverses variantes.

On aperçoit par ailleurs sur la figure 9, l'amplificateur opérationnel OP110 dont la sortie attaque la base du transistor ballast T23 et qui compare sur ses entrées la tension prélevée aux bornes de la résistance shunt R21 à une tension de référence VREF.

En l'espèce cette tension de référence est définie par un pont diviseur résistif comprenant en série, entre une borne d'alimentation électrique stabilisée interne +VC, par exemple de +6V, et la masse, deux résistances R112, R113, et une résistance intermédiaire R120 à sorties multiples. La résistance R120 est placée entre les résistances R112 et R113. Ces sorties peuvent être par exemple au nombre de 64.

Plus précisément les sorties de la résistance R120 sont reliées à l'entrée non inverseuse de OP110 par le décodeur 134 comprenant un nombre d'interrupteurs égal au nombre de sorties de la résistance R120. Cet organe de décodage est piloté par un organe de validation 133 et un compteur 132, comme indiqué précédemment.

Ainsi la sortie de la résistance R120 sélectionnée, donc la valeur de VREF appliquée à OP110 dépend du mot de codage externe appliqué au compteur par l'entrée 131.

Le circuit de mesure conforme à la présente invention peut être conçu pour opérer un affichage analogique à l'aide d'un logomètre comme évoqué précédemment, ou encore un affichage numérique.

Bien entendu la présente invention n'est pas limitée aux modes de réalisation particuliers qui viennent d'être décrits mais s'étend à toutes variantes conformes à son esprit.

Selon les modes de réalisation précités, les sources d'alimentation contrôlée mises sélectivement en service, sont des sources de courant connectées en parallèle d'une résistance shunt ou définissant une tension de référence servant à piloter le transistor ballast.

En variante on peut utiliser des sources d'alimentation en tension constante mises sélectivement en service pour obtenir les paramètres d'alimentation requis pour la sonde 10.

Par exemple, on peut envisager d'alimenter la sonde 10 sous tension constante contrôlée et de détecter la différence d'intensité traversant la sonde entre l'instant initial d'alimentation T0 et un instant ultérieur T1 pour lequel le système a atteint sa stabilité thermique.

D'autres variantes de réalisation pourront encore être dérivées des dispositions décrites dans le document US-A-4513616 au nom de la demanderesse.

On notera que l'électrode de commande des sources 120.1 à 120.N doit être mise à la masse, lorsque les interrupteurs 121.1 à 121.N respectivement associés ne la commandent pas, pour ne pas rester à un potentiel flottant mal défini.

A cet effet comme représenté sur la figure 5 un inverseur 123.1 à 123.N inverse le potentiel de la commande de 121.1 à 121.N et attaque par sa sortie l'électrode de commande de transistors interrupteurs 124.1 à 124.N connectés respectivement entre l'électrode de commande des sources 120.1 à 120.N et la masse.

## Revendications

1. Circuit électronique de mesure du type comprenant des moyens d'alimentation électrique contrôlée d'une sonde résistive et des moyens de mesure d'une grandeur électrique fonction de la résistance de la sonde résistive caractérisé par le fait qu'il comprend :
- une pluralité de sources d'alimentation électrique (120.1-120.N),
- un même nombre d'interrupteurs (121.1-121.N) aptes à mettre sélectivement en service chacune desdites sources d'alimentation électrique (120.1-120.N),
- une borne d'entrée (131) apte à recevoir un signal externe de codage représentatif du nombre de sources d'alimentation électrique à mettre en service,
- un organe (130) de décodage du signal externe, qui commande les interrupteurs (121.1-121.N), et
- un organe de validation (133) apte à figer les sorties de l'organe de décodage dans un état déterminé.

2. Circuit électronique de mesure selon la revendication 1, caractérisé par le fait que les sources d'alimentation électrique (120.1-120.N) susceptibles d'être mises sélectivement en service sont des sources de courant.

3. Circuit électronique de mesure selon l'une des revendications 1 et 2, caractérisé par le fait que les sources d'alimentation (120.1-120.N) sont connectées, par l'intermédiaire des interrupteurs (121.1-121.N), en parallèle d'une résistance shunt (R21) connectée en série de la sonde résistive (10) et d'un transistor ballast (T23).

4. Circuit électronique de mesure selon l'une des revendications 1 à 3, caractérisé par le fait qu'il comprend un amplificateur opérationnel (OP110) qui compare la tension aux bornes d'une résistance shunt (R21) à une tension de référence et commande un transistor ballast (T23).

5. Circuit électronique de mesure selon l'une des revendications 1 à 4, caractérisé par le fait que l'organe de décodage (130) comprend un compteur (132) apte à compter le nombre d'impulsions appliquées sur la borne d'entrée (131) et un décodeur (134) de la sortie du compteur (132), les sorties (135) du décodeur (134) pilotant les interrupteurs (121.1-121.N).

6. Circuit électronique de mesure selon la revendication 2, caractérisé par le fait que les diverses sources de courant (120.1-120.N) délivrent des courants identiques.

7. Circuit électronique de mesure selon la revendication 2, caractérisé par le fait que les diverses sources de courant (120.1-120.N) délivrent des courants différents.

8. Circuit électronique de mesure selon l'une des revendications 1 et 2, caractérisé par le fait que les diverses sources d'alimentation (120.1-120.N) définissent une valeur de référence de tension ajustable utilisée pour le pilotage d'un transistor ballast (T23).

9. Circuit électronique de mesure selon la revendication 1, caractérisé par le fait que les sources d'alimentation électrique (120.1-120.N) sont des sources de tension constante.

10. Circuit électronique de mesure selon l'une des revendications 1 à 9, caractérisé par le fait qu'il comprend un pont diviseur résistif (R120) à sorties multiples reliées par l'intermédiaire d'un décodeur (134) à une entrée de référence d'un amplificateur opérationnel (OP110) qui compare la tension de référence (VREF) ainsi formée à la tension aux bornes d'une résistance shunt (R21) et commande un transistor ballast (T23).

11. Circuit électronique de mesure selon l'une des revendications 1 à 10, caractérisé par le fait qu'il comprend un convertisseur analogique numérique (140) apte à convertir en valeur numérique deux valeurs de tensions successives (U0, U1) mesurées aux bornes de la sonde résistive, un organe (141) apte à déterminer la différence entre ces deux tensions successives (U1-U0) et une mémoire (142) adressée par ladite valeur de différence pour définir en sortie un signal utile pour commander un dispositif d'affichage.

12. Circuit électronique de mesure selon l'une des revendications 1 à 11, caractérisé par le fait qu'il est réalisé sous forme d'un circuit intégré.

## Claims

1. An electronic measuring circuit comprising controlled electrical power supply means for a resistive probe and means for measuring an electrical magnitude that is a function of the resistance of the resistive probe, the circuit being characterized by the fact that it comprises:
a plurality of electrical power supply sources (120.1-120.n);
the same number of switches (121.1-121.n) suitable for selectively switching on each of said electrical power supply sources (120.1-120.n);
an input terminal (131) suitable for receiving an external code signal representative of the number of electrical power supply sources to be switched on;
a member (130) for decoding the external signal, and for controlling the switches (121.1-121.n); and
a confirmation member (133) suitable for "freezing" the outputs of the decoding member in a determined state.

2. An electronic measuring circuit according to claim 1, characterized by the fact that the electrical power supply sources (120.1-120.n) suitable for being selectively switched on are current sources.

3. An electronic measuring circuit according to claim 1 or 2, characterized by the fact that the power supply sources (120.1-120.n) are connected via the switches (121.1-121.n) in parallel with a shunt resistor (R21) connected in series with the resistive probe (10) and with a ballast transistor (T23).

4. An electronic measuring circuit according to any one of claims 1 to 3, characterized by the fact that it includes an operational amplifier (OP110) which compares the voltage across the terminals of a shunt resistor (R21) with a reference voltage, and which controls a ballast transistor (T23).

5. An electronic measuring circuit according to any one of claims 1 to 4, characterized by the fact that the decoding member (130) comprises a counter (132) suitable for counting the number of pulses applied to an input terminal (131), and a decoder (134) for decoding the output of the counter (132), the outputs (135) of the decoder (134) controlling the switches (121.1-121.n).

6. An electronic measuring circuit according to claim 2, characterized by the fact that the various current sources (120.1-120.n) deliver identical currents.

7. An electronic measuring circuit according to claim 2, characterized by the fact that the various current sources (120.1-120.n) deliver different currents.

8. An electronic measuring circuit according to claim 1 or 2, characterized by the fact that the various power supply sources (120.1-120.n) define an adjustable reference voltage value used for controlling a ballast transistor (T23).

9. An electronic measuring circuit according to claim 1, characterized by the fact that the electrical power supply sources (120.1-120.n) are constant voltage sources.

10. An electronic measuring circuit according to any one of claims 1 to 9, characterized by the fact that it includes a resistive divider bridge (R120) having multiple outputs connected via a decoder (134) to a reference input of an operational amplifier (OP110) which compares the resulting reference voltage (VRef) with the voltage across the terminals of a shunt resistor (R21) and which controls a ballast transistor (T23).

11. An electronic measuring circuit according to any one of claims 1 to 10, characterized by the fact that it includes an analog-to-digital converter (140) suitable for converting two successive voltage values (U0, U1) measured across the terminals of the resistive probe into digital values, a member (141) suitable for determining the difference between said two successive voltages (U1-U0), and a memory (142) addressed by said difference value to define an output signal suitable for controlling a display device.

12. An electronic measuring circuit according to any one of claims 1 to 11, characterized by the fact that it is implemented in the form of an integrated circuit.

## Patentansprüche

1. Elektronische Meßschaltung mit einer elektrischen Versorgungseinrichtung, die eine Widerstandssonde steuert, und mit einer Einrichtung zum Messen einer elektrischen Größe, die eine Funktion des Widerstandes der Widerstandssonde ist, dadurch gekennzeichnet, daß sie enthält:
- eine Anzahl von elektrischen Versorgungsquellen (120.1-120.N),
- eine gleiche Anzahl von Schaltern (121.1-121.N), mit denen jede dieser elektrischen Versorgungsquellen (120.1-120.N) einzeln eingeschaltet werden kann,
- einen Eingangsanschluß (131), der ein externes Kodesignal aufnehmen kann, das die Anzahl der einzuschaltenden elektrischen Versorgungsquellen festlegt,
- ein Vorrichtung (130) zum Dekodieren des externen Signals, die die Schalter (121.1-121.N) ansteuert, und
- eine Bestätigungsvorrichtung (133), die die Ausgänge der Dekodiervorrichtung in einem bestimmten Zustand festhalten kann.

2. Elektronische Meßschaltung nach Anspruch 1, dadurch gekennzeichnet, daß die elektrischen Versorgungsquellen (120.1-120.N), die einzeln eingeschaltet werden können, Stromquellen sind.

3. Elektronische Meßschaltung nach Anspruch 1 oder 2, dadurch gekennzeichnet, daß die Versorgungsquellen (120.1-120.N) über die Schalter (121.1-121.N) zu einem Nebenwiderstand (R21) parallel geschaltet sind, der mit der Widerstandssonde (10) und einem Lasttransistor (T23) in Reihe geschaltet ist.

4. Elektronische Meßschaltung nach einem der Ansprüche 1 bis 3, dadurch gekennzeichnet, daß sie einen Operationsverstärker (OP110) enthält, der die Spannung an den Klemmen des Nebenwiderstands (R21) mit einer Bezugsspannung vergleicht und einen Lasttransistor (T23) ansteuert.

5. Elektronische Meßschaltung nach einem der Ansprüche 1 bis 4, dadurch gekennzeichnet, daß die Dekodiervorrichtung (130) einen Zähler (132), der die Impulse am Eingangsanschluß (131) zählen kann, und einen Dekodierer (134) am Ausgang des Zählers (132) aufweist, wobei die Ausgänge (135) des Dekodierers (134) die Schalter (121.1-121.N) ansteuern.

6. Elektronische Meßschaltung nach Anspruch 2, dadurch gekennzeichnet, daß die verschiedenen Stromquellen (120.1-120.N) identische Ströme liefern.

7. Elektronische Meßschaltung nach Anspruch 2, dadurch gekennzeichnet, daß die verschiedenen Stromquellen (120.1-120.N) verschiedene Ströme liefern.

8. Elektronische Meßschaltung nach Anspruch 1 oder 2, dadurch gekennzeichnet, daß die verschiedenen Versorgungsquellen (120.1-120.N) einen einstellbaren Bezugsspannungswert festlegen, der zur Ansteuerung eines Lasttransistors (T23) verwendet wird.

9. Elektronische Meßschaltung nach Anspruch 1, dadurch gekennzeichnet, daß die elektrischen Versorgungsquellen (120.1-120.N) Konstantspannungsquellen sind.

10. Elektronische Meßschaltung nach einem der Ansprüche 1 bis 9, dadurch gekennzeichnet, daß sie eine Widerstandsbrücke (R120) mit mehreren Ausgängen enthält, die über einen Dekodierer (134) mit einem Bezugseingang eines Operationsverstärkers (OP110) angeschlossen ist, der die so erhaltene Bezugsspannung (VREF) mit der Spannung an den Klemmen eines Nebenwiderstands (R21) vergleicht und einen Lasttransitor (T23) ansteuert.

11. Elektronische Meßschaltung nach einem der Ansprüche 1 bis 10, dadurch gekennzeichnet, daß sie einen Analog-Digital-Umwandler (140), der zwei aufeinanderfolgende Spannungswerte (U0, U1), die an den Klemmen der Widerstandssonde gemessen werden, in digitale Werte umwandeln kann, eine Einrichtung (141) zur Bestimmung der Differenz zwischen diesen beiden aufeinanderfolgenden Spannungen (U1-U0) und einen Speicher (142) enthält, der von diesem Differenzwert adressiert wird, um an dessen Ausgang ein Signal zu erzeugen, das zur Ansteuerung einer Anzeigevorrichtung verwendet wird.

12. Elektronische Meßschaltung nach einem der Ansprüche 1 bis 11, dadurch gekennzeichnet, daß sie in Form eines integrierten Schaltkreises realisiert wird.
